# EUROPEAN PATENT APPLICATION

(11) **EP 4 397 452 A1**
(43) Date of publication of application: **10.07.2024**
(21) Application number: 22864590.9
(22) Date of filing: 30.08.2022
(51) Int. Cl.: B25J 9/16, G05B 19/42

(54) **ROBOT SYSTEM AND ROBOT**

(30) Priority: 31.08.2021 JP 2021140738
(71) Applicant: KAWASAKI JUKOGYO KABUSHIKI KAISHA, Kobe-shi, Hyogo 650-8670 (JP)
(72) Inventor: YAMASUMI, Satoru, Hyogo 650-8670 (JP); FUKUSHIMA, Masato, Hyogo 650-8670 (JP); ONISHI, Masafumi, Hyogo 650-8670 (JP); KOYAMA, Masataka, Hyogo 650-8670 (JP); OKURA, Yasuhiro, Hyogo 650-8670 (JP); IJICHI, Satoshi, Hyogo 650-8670 (JP); SANTO, Yoshiki, Hyogo 650-8670 (JP)
(74) Representative: Müller-Boré & Partner Patentanwälte PartG mbB
(86) International application number: PCT/JP2022/032679
(87) International publication number: WO 2023/033008

(57) **Abstract**

A robot system (100) includes a multi-joint robot arm (10), a robot controller (21), a working unit (30), a signal output (22) to output a signal based on a relative moving amount of the working unit by each relative moving amount of the working unit relative to the workpiece, and a work controller (40) configured or programmed to control working of the working unit with the workpiece based on the signal output by the signal output.

## Description

### Technical Field

The present disclosure relates to a robot system and a robot, and in particular to a robot system and a robot including a multi-joint robot arm.

### Background Art

Robots including a multi-joint robot arm are known in the art.

Japanese Patent Laid-Open Publication No. JP 2013-166185 discloses such a robot system including a multi-joint robot arm having a plurality of joints, a controller configured to move the multi-joint robot arm, and an image capturer arranged in a distal end part of the multi-joint robot arm and configured to capture an image of an inspection object. In the robot system disclosed in Japanese Patent Laid-Open Publication No. JP 2013-166185, the controller is configured to transmit an image-capturing command signal for capturing an image of the inspection object to the image capturer if a distal end of multi-joint robot arm is moved to a predetermined position.

### Prior Art

### Patent Document

Patent Document 1: Japanese Patent Laid-Open Publication No. JP 2013-166185

### Summary of the Invention

### Problems to be Solved by the Invention

In the above Japanese Patent Laid-Open Publication No. JP 2013-166185, the controller is configured to transmit an image-capturing command signal for capturing an image of the inspection object to the image capturer if the distal end of multi-joint robot arm is moved to a predetermined position. For this reason, in a case in which the number of positions at which working such as imaging is performed is large, such a number of positions are necessarily specified, and as a result a task of specifying the positions at which the working is performed is burdensome. From this viewpoint, it is desired to reduce the burden of specifying the positions in working while moving such a working unit relative to a workpiece by using the multi-joint robot arm.

The present disclosure is intended to solve the above problem, and one object of the present disclosure is to provide a robot system and a robot capable of reducing a burden of specifying positions in working while moving a working unit relative to a workpiece by using a multi-joint robot arm.

### Means for Solving the Problems

In order to attain the aforementioned object, a robot system according to a first aspect includes a multi-joint robot arm including a plurality of joints; a robot controller configured or programmed to control movement of the multi-joint robot arm; a working unit to work with a workpiece; a signal output to output a signal based on a relative moving amount of the working unit by each relative moving amount of the working unit relative to the workpiece in the movement of the workpiece or the working unit arranged on a distal end part of the multi-joint robot arm; and a work controller configured or programmed to control working of the working unit with the workpiece based on the signal output by the signal output.

In the robot system according to the first aspect, as discussed above, the signal output to output a signal based on a relative moving amount of the working unit by each relative moving amount of the working unit relative to the workpiece is provided. In addition, the work controller configured or programmed to control working of the working unit with the workpiece based on the signals output by the signal output is provided. According to this configuration, because the work controller can control the working of the working unit by acquiring a relative moving amount of the working unit relative to the workpiece in each relative movement of the workpiece or the working unit, the working unit can work with the workpiece without previously specifying all working positions. Consequently, it is possible to reduce a burden of specifying the positions in working while moving the working unit relative to a workpiece by using the multi-joint robot arm. Also, even in a case in which a relative moving speed of the working unit moved by the multi-joint robot arm is not constant (e.g., in a case in which the working is performed on both linear and curved parts of a workpiece), the working unit can work with the workpiece by each predetermined relative moving amount. In other words, because it is difficult to increase the relative moving speed in a case of complicated relative movement such as relative movement along the curved part, the relative moving speed is necessarily reduced even in the linear part in which the relative moving speed can be increased if the relative moving speed of the working unit is set constant. Contrary to this, in the robot system according to the present this disclosure, because the working with the workpiece is performed not based on a speed but by each predetermined relative moving amount, the relative moving speed of the working unit is not necessarily set constant, and as a result the relative moving speed can be increased in the linear part in which the relative moving speed can be increased. Accordingly, it is possible to prevent reduction of the entire working speed. Also, if a relative moving speed of the working unit relative to the workpiece is changed while the working unit works with the workpiece independently of a speed, the working unit works with the workpiece by a closer interval in the curved part in which the relative moving speed is reduced as compared with the linear part in which the relative moving speed is increased. Contrary to this, in the robot system according to the present this disclosure, because the working is performed by each predetermined relative moving amount, it is possible to prevent that the working unit works with the workpiece by a closer interval even in the curved part in which the relative moving speed of the working unit is reduced than the linear part in which the relative moving speed of the working unit is increased, and as a result it is possible to prevent uneven working of the working unit with the workpiece.

A robot according to a second aspect includes a multi-joint robot arm including a plurality of joints; a robot controller configured or programmed to control movement of the multi-joint robot arm; and a signal output to output a signal based on a relative moving amount of the working unit by each relative moving amount of a working unit for working with the workpiece relative to the workpiece in the movement of the workpiece or the working unit arranged on a distal end part of the multi-joint robot arm.

In the robot according to the second aspect, as discussed above, the signal output to output a signal based on a relative moving amount of the working unit by each relative moving amount of the working unit relative to the workpiece is provided. According to this configuration, because the working of the working unit can be controlled by acquiring a relative moving amount of the working unit relative to the workpiece in each relative movement of the workpiece or the working unit based on the signal output by the signal output, the working unit can work with the workpiece without previously specifying all working positions. Consequently, it is possible to provide a robot capable of reducing a burden of specifying the positions in working while moving the working unit relative to a workpiece by using the multi-joint robot arm.

### Effect of the Invention

According to this disclosure, as discussed above, it is possible to reduce a burden of specifying the positions in working while moving the working unit relative to a workpiece by using the multi-joint robot arm.

### Brief Description of the Drawings

FIG. 1 is a diagram schematically showing a robot system according to one embodiment.
FIG. 2 is a diagram showing a control-functional configuration of the robot system according to the one embodiment.
FIG. 3 is a chart illustrating exemplary signals generated in the robot system according to the one embodiment.
FIG. 4 is a diagram illustrating a first example of relative movement of a working unit of the robot system according to the one embodiment.
FIG. 5 is a chart illustrating working of the working unit in accordance with the relative movement of the working unit of the robot system according to the one embodiment.
FIG. 6 is a diagram illustrating a second example of relative movement of the working unit of the robot system according to the one embodiment.
FIG. 7 is a diagram showing comparison between an example of working of the working unit of the robot system according to one embodiment and working of a working unit of a robot system of a comparative example.
FIG. 8 is a diagram showing a working unit of a robot system according to a modified example of the one embodiment.

### Modes for Carrying Out the Invention

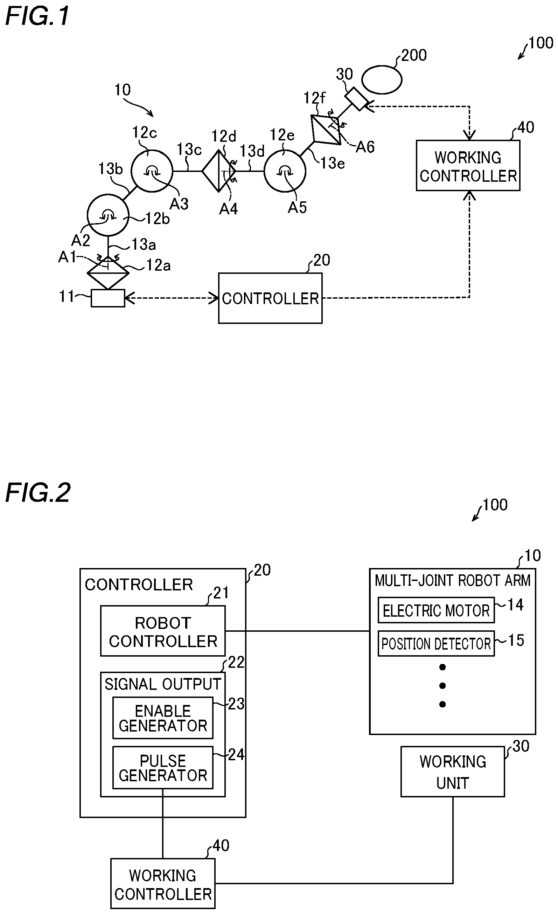

The following description describes a configuration of a robot system 100 according to one embodiment with reference to FIGS. 1 to 8.

As shown in FIG. 1, the robot system 100 performs working on a workpiece 200. The robot system 100 includes a multi-joint robot arm 10, and a ntroller 20 configured or programmed to control the multi-joint robot arm. The robot system 100 further includes a working unit 30, and a work controller 40 configured or programmed to control the working unit 30.

For example, the multi-joint robot arm 10 is an industrial robot, medical robot, etc. The multi-joint robot arm 10 includes a plurality of joints. For example, the multi-joint robot arm 10 includes a 6-axis vertical multi-joint arm. The multi-joint robot arm 10 is actuated by AC power supplied from the outside.

The controller 20 includes a robot controller 21, and a signal output 22 as shown in FIG. 2. The signal output 22 includes an enable generator 23, and a pulse generator 24.

The robot controller 21 is configured or programmed to control movement of the multi-joint robot arm 10. Specifically, the robot controller 21 is configured or programmed to control power supplied to electric motors 14 mounted in the joints of the multi-joint robot arm 10 whereby controlling the movement of the multi-joint robot arm 10. The robot controller 21 includes a central processing unit (CPU), and a memory. The robot controller 21 is configured or programmed to control the movement of the multi-joint robot arm 10 by executing a predetermined program. The robot controller 21 receives instructions (teaching) relating to the movement of the multi-joint robot arm 10 input by a user, and directs the multi-joint robot arm 10 to move based on the teaching. Specifically, the robot controller 21 receives positions and orientations of control points of the multi-joint robot arm 10, and calculates the movement of each joint of the multi-joint robot arm 10.

The multi-joint robot arm 10 includes six joints 12a, 12b, 12c, 12d, 12e and 12f, and links 13a, 13b, 13c, 13d and 13e connecting the joints to each other as shown in FIG. 1. As shown in FIG. 2, each of the six joints 12a to 12f included in the electric motor 14 is constructed of a servo motor, and a position detector 15 configured to detect a rotational position of the joint. As shown in FIG. 1, the working unit 30 is attached to one end part of the multi-joint robot arm 10. Also, the multi-joint robot arm 10 includes a base 11 arranged in another end part and installed onto a floor, wall, pillar, etc.

Each of the six joints 12a to 12f is rotated by its electric motor 14.

The joint 12a of a first axis is connected to the base 11. The joint 12a is configured to rotate the link 13a with respect to the base 11 about a rotation axis A1. The joint 12b of a second axis is configured to rotate the link 13b with respect to the link 13a about a rotation axis A2 orthogonal to the rotation axis A1.

The joint 12c of a third axis is configured to rotate the link 13c with respect to the link 13b about a rotation axis A3 parallel to the rotation axis A2. The joint 12d of a fourth axis is configured to rotate the link 13d with respect to the link 13c about a rotation axis A4 orthogonal to the rotation axis A3.

The joint 12e of a fifth axis is configured to rotate the link 13e with respect to the link 13d about a rotation axis A5 orthogonal to the rotation axis A4. The joint 12f of a sixth axis is configured to rotate the working unit 30 with respect to the link 13e about a rotation axis A6 orthogonal to the rotation axis A5.

The working unit 30 works with the workpiece 200. For example, the working unit 30 includes at least one of a line camera, an area camera, a laser profile sensor, a ranging sensor, an applicator, an affixer, a sprayer, a welder, and an ultrasonic inspector.

The working unit 30 works with the workpiece 200 while moving relative to the workpiece 200. For example, the line camera is configured to capture line-shaped images while moving relative to the workpiece 200. The area camera is configured to capture rectangular images while moving relative to the workpiece 200. The laser profile sensor is configured to project laser light on the workpiece 200 while moving relative to the workpiece 200 to measure a three-dimensional shape of the workpiece 200 by using light sectioning.

The ranging sensor is configured to measure distances between the ranging sensor and positions on the workpiece 200 while moving relative to the workpiece 200. The applicator is configured to apply a material to be applied onto the workpiece 200 while moving relative to the workpiece 200. For example, the material to be applied is a liquid or paste-like material such as adhesive, sealant, reagent, paint, solder, etc.

The affixer is configured to affix a material to be affixed onto the workpiece 200 while moving relative to the workpiece 200. For example, the material to be affixed is a sealant, a seal, a piece of tape, etc. The sprayer is configured to spray a material to be sprayed to onto the workpiece 200 while moving relative to the workpiece 200. For example, the material to be sprayed is a liquid material such as adhesive, medicine, paint, etc. The welder is configured to weld workpieces 200 while moving relative to the workpieces 200. The ultrasonic inspector is configured to apply ultrasound to the workpiece 200 and to detect the ultrasound reflected while moving relative to the workpiece 200 whereby detecting a flaw of the workpiece 200.

The work controller 40 is configured or programmed to control the working of the working unit 30 with the workpiece 200. In a case in which the working unit 30 is a line camera or area camera, the work controller 40 is configured or programmed to control image-capturing of the working unit 30. Specifically, the work controller 40 is configured or programmed to control capturing timing of images of the workpiece 200 by the working unit 30.

In a case in which the working unit 30 is a laser profile sensor, the work controller 40 is configured or programmed to control laser-light-projecting and image-capturing of the working unit 30. Specifically, the work controller 40 is configured or programmed to control capturing timing of images of the workpiece 200 by the working unit 30.

In a case in which the working unit 30 is a ranging sensor, the work controller 40 is configured or programmed to control measurement timing of the workpiece 200 by the working unit 30. In a case in which the working unit 30 is a applicator, the work controller 40 is configured or programmed to control application timing of a material to be applied and an application amount of the material to be applied by the working unit 30.

In a case in which the working unit 30 is an affixer, the work controller 40 is configured or programmed to control affixation timing of a material to be affixed and an affixation amount of the material to be affixed by the working unit 30. In a case in which the working unit 30 is a sprayer, the work controller 40 is configured or programmed to control spraying timing of a material to be sprayed and a spraying amount of the material to be sprayed by the working unit 30.

In a case in which the working unit 30 is a welder, the work controller 40 is configured or programmed to control welding timing and a welding amount by the working unit 30. In a case in which the working unit 30 is an ultrasonic inspector, the work controller 40 is configured or programmed to control applying timing of ultrasound and detecting amount of the ultrasound by the working unit 30.

Here, the work controller 40 is configured or programmed to control the working of the working unit 30 with the workpiece 200 based on signals that are output by the signal output 22 of the controller 20.

The signal output 22 outputs a signal based on a relative moving amount of the working unit 30 by each relative moving amount of the working unit 30 relative to the workpiece 200 in the movement of the working unit 30 arranged on a distal end part of the multi-joint robot arm 10.

Specifically, the signal output 22 outputs the signal, which is output based on the predetermined relative moving amount of the working unit 30, by using a variable frequency pulse signal by each relative moving amount of the working unit 30 relative to the workpiece 200. For example, the signal output 22 is configured to produce pulse enable by using the enable generator 23. In addition, the signal output 22 is configured to produce the pulse signals by using the pulse generator 24 based on the pulse enable produced by the enable generator 23.

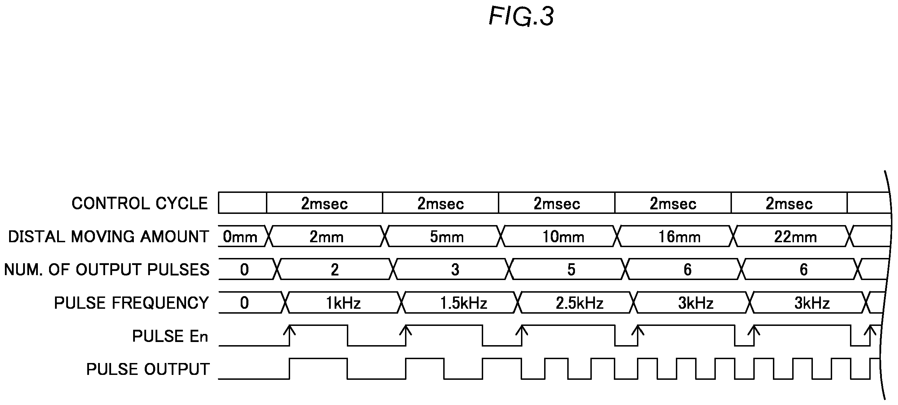

The signal output 22 outputs a predetermined pulse signal by each relative moving amount of the working unit 30 relative to the workpiece 200. For example, as shown in FIG. 3, the signal output 22 produces and outputs pulse signals based on a relative moving amount of the working unit 30 in each predetermined processing cycle. In other words, the signal output 22 acquires the relative moving amount of the working unit 30 relative to the workpiece 200 in each predetermined processing cycle. The signal output 22 generates a number of pulse signals based on the relative moving amount acquired. The pulse signal is produced by each relative moving amount of x mm. For example, in a case in which the working unit moves 5x mm relative to the workpiece in a predetermined cycle, five pulse signals are generated in the predetermined cycle. The number of pulse signals is counted by each rise and each fall. In other words, one rise and one fall produce two pulse signals. The frequency of the output pulse is variable, for example, in a range of 0 Hz to several MHz. In other words, if the relative moving amount increases, a frequency of an output pulse increases, and if the relative moving amount decreases, the frequency of the output pulse decreases.

In an exemplary chart of FIG. 3, a control cycle is 2 msec, and a moving amount is acquired in each control cycle so that pulse signals are output based on the moving amount. Distal moving amounts in FIG. 3 represent an accumulated moving amount from 0 mm. In other words, a difference between a previous accumulated moving amount and a current accumulated moving amount is acquired as the relative moving amount. For example, if accumulated distal moving amounts in previous and current control cycles are 10 mm and 16 mm, respectively, 6 mm is acquired as a relative moving amount in the current control cycle. In an exemplary chart of FIG. 3, a pulse resolution is assumed as 1 mm/pulse. That is, one pulse signal is output by each movement of 1 mm. For example, when the working unit moves 2 mm relative to the workpiece, the number of output pulses is set to 2, and a frequency of pulses is set to 1 kHz. Also, when the working unit moves 3 mm relative to the workpiece, the number of output pulses is set to 3, and a frequency of pulses is set to 1.5 kHz.

The signal output 22 outputs the pulse enable from the enable generator 23 at start of a predetermined processing cycle, and the pulse generator 24 starts to output pulses simultaneously with the outputting of the pulse enable. Also, the signal output 22 stops outputting the pulse enable from the enable generator 23 when the pulse generator 24 outputs a final pulse. Accordingly, it is possible to prevent that processing becomes busy at the start of a predetermined processing cycle. Consequently, a time margin is not required for calculation.

Alternatively, the signal output 22 can continuously output the pulse enable to the pulse generator 24 by using the enable generator 23. Also, the signal output 22 can provide a calculation cycle correction amount that is sufficiently small relative to the processing cycle so that the enable generator 23 stops outputting the pulse enable for the calculation cycle correction amount. As a result, the time margin for calculation corresponding to the calculation cycle correction amount can be provided. For example, the calculation cycle correction amount is 40 µsec, which is sufficiently small relative to the processing cycle of 2 msec.

Alternatively, the signal output 22 can have a rest time in the beginning of the processing cycle in which no pulse is not output by the pulse generator 24, and then generate pulses after the rest time.

The signal output 22 includes an FPGA (field Programmable Gate Array) for example, and performs processing by using the FPGA.

If the CPU, which controls the multi-joint robot arm 10, directly controls the pulse output function, a load on the CPU can be increased, and as a result the CPU cannot accurately control high frequency pulses on some occasions. For this reason, another processor for controlling pulses such as an FPGA provided separately from the CPU, which controls the multi-joint robot arm 10, is used to control outputting of pulses.

Pulses can be accurately output by division of processing between the CPU and the processor for controlling pulses, in other words, by calculating a relative moving amount of the distal end by using the CPU, which controls the multi-joint robot arm 10, and by controlling pulse frequencies and the number of pulses based on the distal relative moving amount by using the processor for controlling pulses. Because the pulse output controls pulses by using the another processor provided separately from the CPU, pulse output specifications such as pulse-to-distance conversion and nX frequency multiplication can be easily changed or expanded by changing control parameters.

The signal output 22 acquires a relative moving amount of the working unit 30 in a predetermined processing cycle, and outputs pulse signals on the assumption that the working unit would move with constant velocity relative to the workpiece in the predetermined processing cycle. Here, because the predetermined processing cycle is sufficiently small, such a relative moving amount acquired on the assumption that the working unit would move with constant velocity relative to the workpiece in the predetermined processing cycle is substantially equal to an actual relative moving amount of the working unit 30.

Alternatively, the signal output 22 can acquire a relative moving amount of the working unit 30 based on actual movement of the working unit 30, or acquire a relative moving amount of the working unit 30 based on a movement command of the multi-joint robot arm 10 of the robot controller 21.

In a case in which the multi-joint robot arm 10 is moved by an external moving mechanism, the signal output 22 can acquire a relative moving amount of the working unit 30 relative to the workpiece 200 in consideration of the movement by the external moving mechanism. The external moving mechanisms include a traveling shaft for moving the base 11 of the multi-joint robot arm 10 or a rotating table for rotating the base.

A relative moving amount of the working unit 30 relative to the workpiece 200 is acquired based on the movement of the control points TCP for controlling the movement of the multi-joint robot arm 10. The control points TCP for controlling the movement of the multi-joint robot arm 10 are specified by working points of the working unit 30 with the workpiece 200.

In a case in which the working unit 30 is a line camera, area camera or laser profile sensor, the control points TCP are specified by focal positions of images to be captured by the working unit 30. In a case in which the working unit 30 is a ranging sensor, the control points TCP are specified by measurement positions of the working unit 30.

In a case in which the working unit 30 is an applicator, the control points TCP are specified by application positions on the working unit 30. In a case in which the working unit 30 is an affixer, the control points TCP are specified by affixation positions on the working unit 30. In a case in which the working unit 30 is a welder, the control points TCP are specified by welding positions on the working unit 30. In a case in which the working unit 30 is an ultrasonic inspector, the control points TCP are specified by positions of the working unit 30 to be inspected.

The work controller 40 controls the working of the working unit 30 with the workpiece 200 by using the signal by the signal output 22 as a trigger. Specifically, the work controller 40 is configured to direct the working unit 30 to work with the workpiece by each constant moving amount based on the signal output by the signal output 22. For example, the work controller 40 counts the pulse signals output by the signal output 22 to acquire relative moving amounts of the working unit 30. The work controller 40 directs the working unit 30 to work with the workpiece 200 every when the working unit 30 moves by the constant moving amount.

In a case in which the working unit 30 is a line camera or area camera, the work controller 40 is configured to direct the working unit 30 to capture an image by each constant moving amount of the working unit 30. In a case in which the working unit 30 is a laser profile sensor, the work controller 40 is configured to direct the working unit to project laser light on the workpiece and to capture a laser-light image of the workpiece by each constant moving amount of the working unit 30.

In a case in which the working unit 30 is a ranging sensor, the work controller 40 is configured to direct the working unit to measure a distance between the working unit and the workpiece 200 by each constant moving amount of the working unit 30. In a case in which the working unit 30 is an applicator, the work controller 40 is configured to direct the working unit to apply a certain amount of material to be applied onto the workpiece by each constant moving amount of the working unit 30.

In a case in which the working unit 30 is an affixer, the work controller 40 is configured to direct the working unit to affix a certain amount of material to be affixed onto the workpiece by each constant moving amount of the working unit 30. In a case in which the working unit 30 is a sprayer, the work controller 40 is configured to direct the working unit to spray a certain amount of material to be sprayed onto the workpiece by each constant moving amount of the working unit 30.

In a case in which the working unit 30 is a welder, the work controller 40 is configured to direct the working unit to weld certain parts of workpieces by each constant moving amount of the working unit 30. In a case in which the working unit 30 is an ultrasonic inspector, the work controller 40 is configured to direct the working unit to detect a flaw of the workpiece by each constant moving amount of the working unit 30.

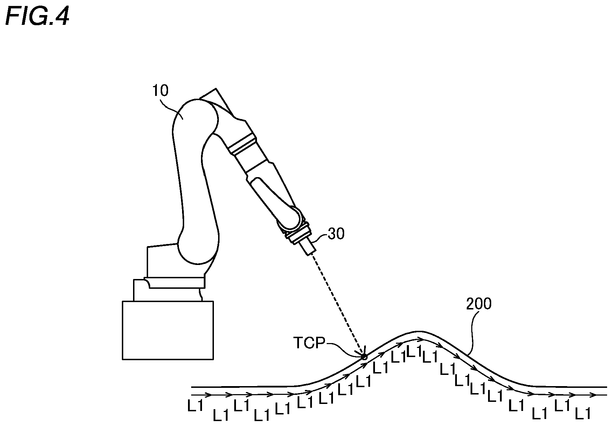

The robot controller 21 is configured to direct the multi-joint robot arm 10 to move the working unit 30 relative to the workpiece 200 along a curve along a surface of the workpiece 200. For example, as shown in FIG. 4, the robot controller 21 directs the multi-joint robot arm 10 to move the working unit 30 along the workpiece 200 that is curved in a vertical direction. In this case, the work controller 40 is configured to direct the working unit 30 to work with the workpiece by each moving amount L1 corresponding to control points TCP.

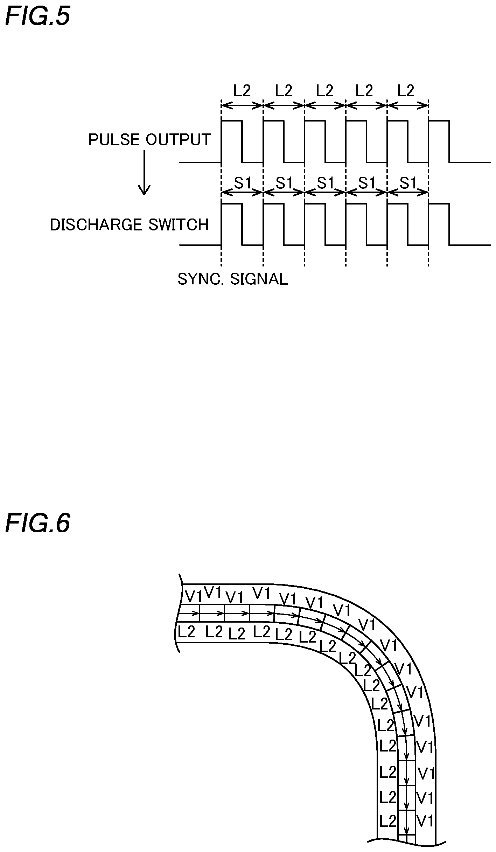

Also, as shown in FIG. 6, the robot controller 21 directs the multi-joint robot arm 10 to move the working unit 30 along a curve line extending along working positions of the workpiece 200 that has a curved part. In this case, the work controller 40 is configured to direct the working unit 30 to work with the workpiece by each moving amount L2 corresponding to control points TCP.

For example, in a case in which the working unit 30 is an applicator, the work controller 40 directs the working unit to apply an application amount V1 of material to be applied onto the workpiece by each moving amount L2 of the working unit 30. Specifically, as shown in FIG. 5, a discharge switch is turned ON in synchronization with a pulse signal that is output by each moving amount L2. Also, the work controller 40 directs the working unit to adjust a discharge stroke S1 for discharging the material to be applied to a constant amount by each moving amount L2 of the working unit 30 irrespective of a moving speed of the working unit 30.

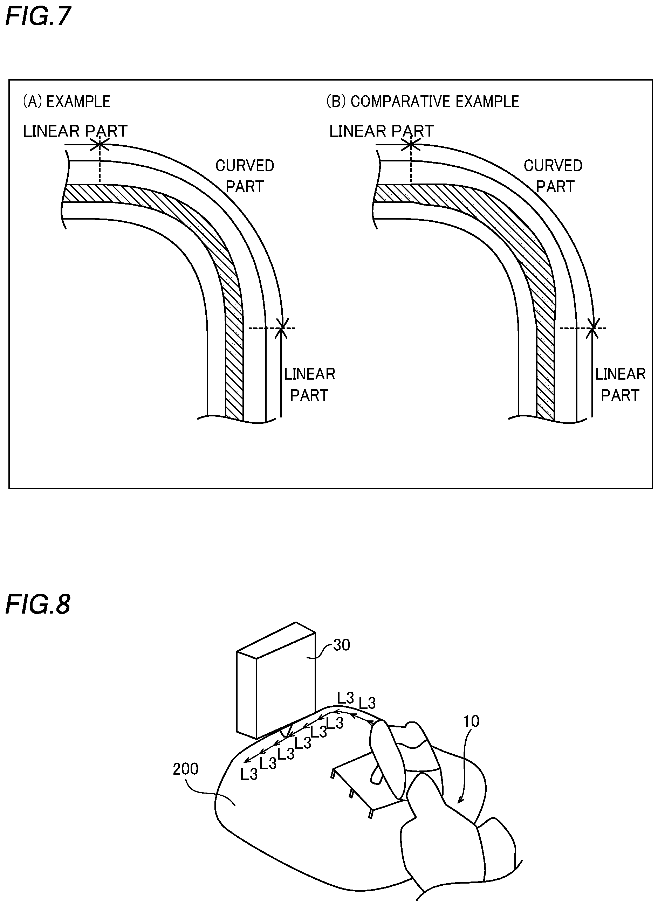

As a result, in an example shown in FIG. 7(A), the material to be applied can be evenly applied both on linear and curved parts. Contrary to this, in a comparative example shown in FIG. 7(B), a constant amount of the material to be applied is applied not based on a relative moving speed of the working unit 30. In this comparative example, a larger amount of the material to be applied is discharged in the curved part so that a larger amount of the material to be applied is applied onto the curved part. Accordingly, the material to be applied is unevenly applied on the linear and curved parts.

Alternatively, the signal output 22 outputs, based on relative movements of a plurality of positions of the working unit 30, a plurality of signals each of which corresponds to one of the plurality of positions of the working unit. For example, a plurality of positions such as the control point TCP, a point on an interior side of the control point TCP, a point on exterior side of the control point TCP, etc. can be specified as the plurality of positions of the working unit 30. Also, the work controller 40 that receives the plurality of signals can direct the working unit 30 to work with the workpiece by each relative moving amount of each of the plurality of positions, or can calculate the relative moving amounts of desired positions based on relative moving amounts of the plurality of positions and can direct the working unit 30 to work with the workpiece by each of the calculated relative moving amounts of the desired positions.

### (Advantages of the Embodiment)

In this embodiment, the following advantages are obtained.

In this embodiment, as discussed above, the signal output 22 outputs a signal based on a predetermined relative moving amount of the working unit 30 by each relative moving amount of the working unit 30 relative to the workpiece 200 is provided. In addition, the work controller 40 is configured or programmed to control working of the working unit 30 with the workpiece 200 based on the signals output by the signal output 22. According to this configuration, because the work controller 40 can control the working of the working unit 30 by acquiring a relative moving amount of the working unit 30 relative to the workpiece 200 in each relative movement of the workpiece or the working unit, the working unit can work with the workpiece 200 without previously specifying all working positions. Consequently, it is possible to reduce a burden of specifying the positions in working while moving the working unit 30 relative to the workpiece 200 by using the multi-joint robot arm 10. Also, even in a case in which a relative moving speed of the working unit 30 moved by the multi-joint robot arm 10 is not constant (e.g., in a case in which the working is performed on both linear and curved parts of the workpiece 200), the working unit 30 can work with the workpiece 200 by each predetermined relative moving amount. In other words, because it is difficult to increase the relative moving speed in a case of complicated relative movement such as relative movement along the curved part, the relative moving speed is necessarily reduced even in the linear part in which the relative moving speed can be increased if the relative moving speed of the working unit 30 is set constant. Contrary to this, in this embodiment, because the working with the workpiece 200 is performed not based on a speed but by each predetermined relative moving amount, the relative moving speed of the working unit 30 is not necessarily set constant, and as a result the relative moving speed can be increased in the linear part in which the relative moving speed can be increased. Accordingly, it is possible to prevent reduction of the entire working speed. Also, if a relative moving speed of the working unit 30 relative to the workpiece 200 is changed while the working unit 30 works with the workpiece 200 independently of a speed, the working unit 30 works with the workpiece 200 by a closer interval in the curved part in which the relative moving speed is reduced as compared with the linear part in which the relative moving speed is increased. Contrary to this, in this embodiment, because the working is performed by each predetermined relative moving amount, it is possible to prevent that the working unit 30 works with the workpiece 200 by a closer interval even in the curved part in which the relative moving speed of the working unit 30 is reduced than the linear part in which the relative moving speed of the working unit 30 is increased, and as a result it is possible to prevent uneven working of the working unit 30 with the workpiece 200.

In this embodiment, as described above, the signal output 22 outputs the signal, which is output based on the predetermined relative moving amount of the working unit 30, by using a variable frequency pulse signal by each predetermined relative moving amount of the working unit 30 relative to the workpiece 200. Accordingly, because a frequency of the variable frequency pulse signals is set to a frequency corresponding to a speed of relative movement of the working unit 30 when the pulse signals are output, each pulse signal can be output by each predetermined relative moving amount of the working unit 30.

In this embodiment, as described above, the signal output 22 outputs a predetermined pulse signal by each predetermined relative moving amount of the working unit 30 relative to the workpiece 200. Accordingly, the relative moving amount of the working unit 30 relative to the workpiece 200 can be easily acquired by counting pulses of the variable frequency pulse signals.

In this embodiment, as described above, the work controller 40 controls the working of the working unit 30 with the workpiece 200 by using the signal output by the signal output 22 as a trigger. Accordingly, the working of the working unit 30 relative to the workpiece 200 can be precisely linked to the relative movement of the working unit 30.

In this embodiment, as described above, the work controller 40 is configured to direct the working unit 30 to work with the workpiece by each constant moving amount based on the signal output by the signal output 22. Accordingly, because the working unit can work with the workpiece by each constant moving amount of the working unit 30 independently of a speed of relative movement of the working unit 30, it is possible to reliably prevent uneven working of the working unit 30 with the workpiece 200.

In this embodiment, as described above, the robot controller 21 is configured to direct the multi-joint robot arm 10 to move the working unit 30 relative to the workpiece 200 along a curve along a surface of the workpiece 200. Accordingly, even if a relative moving speed of the working unit 30 becomes out of constant when the working unit is moved along a curve relative to the surface of the workpiece 200, the working unit 30 can work with the workpiece based on a relative moving amount of the working unit.

In this embodiment, as described above, the signal output 22 outputs, based on relative movements of a plurality of positions of the working unit 30, a plurality of signals each of which corresponds to one of the plurality of positions of the working unit. Accordingly, because moving amounts of relative movements of a plurality of positions of the working unit 30 can be acquired, it is possible to control working of the working unit 30 based on the relative movements of the plurality of positions of the working unit 30.

Also, in this embodiment, as described above, the working unit 30 includes at least one of a line camera, an area camera, a laser profile sensor, a ranging sensor, an applicator, an affixer, a sprayer, and a welder. Accordingly, because an image of the workpiece 200 can be captured or a distance between the workpiece and the working unit can be measured by each relative moving amount while the line camera, area camera, laser profile sensor or ranging sensor is relatively moved along the workpiece 200, shapes and conditions of the workpiece 200 can be precisely acquired. Also, a material to be applied, affixed or sprayed can be applied, affixed or sprayed onto the workpiece 200, or the workpieces 200 can be welded to each other by each relative movement while an applicator, affixer, sprayer, or welder is relatively moved along the workpiece 200, it is possible to prevent uneven application, uneven affixation or uneven spray on the workpiece 200, or uneven welding.

### (Modified Embodiments)

Note that the embodiment disclosed this time must be considered as illustrative in all points and not restrictive. The scope of the present disclosure is not shown by the above description of the embodiments but by the scope of claims for patent, and all modifications or modified examples within the meaning and scope equivalent to the scope of claims for patent are further included.

While the example in which the working unit is arranged on the distal end part of the multi-joint robot arm, and the working unit is moved relative to the workpiece by moving the working unit by using the multi-joint robot arm has been shown in the aforementioned embodiment, the present disclosure is not limited to this. In this disclosure, alternatively, as shown in FIG. 8, the workpiece 200 can be arranged on the distal end part of the multi-joint robot arm 10, and the working unit 30 can be moved relative to the workpiece 200 by moving the workpiece 200 by using the multi-joint robot arm 10. In this case, the working unit 30 can work with the workpiece 200 by each predetermined moving amount L3 corresponding to a control point TCP. In the case in which the workpiece 200 is arranged on the distal end part of the multi-joint robot arm 10, an end effector can be arranged on the distal end part of the multi-joint robot arm 10 so that the workpiece 200 can be grasped by the end effector.

Alternatively, the working unit and the workpiece can be arranged on distal end parts of a plurality of multi-joint robot arms, and the working unit can be moved relative to the workpiece by moving the workpiece and the workpiece by using the multi-joint robot arms.

While the example in which the robot controller, the signal output, and the work controller are separately provided has been shown in the aforementioned embodiment, the present invention is not limited to this. In the present invention, alternatively, the robot controller, the signal output, and the work controller can be installed in a common controller. In this case, the common controller can include separated processors such as CPUs serving as the robot controller, the signal output, and the work controller, or a common processor such as a CPU serving as the robot controller, the signal output, and the work controller.

While the example in which the multi-joint robot arm includes 6 vertical joints has been shown in the aforementioned embodiment, the present disclosure is not limited to this. In the present disclosure, the multi-joint robot arm can include five or less joints, or seven or more joints.

While the example in which a relative moving amount of the working unit relative to the workpiece is acquired based on the movement of the working unit between control points has been shown in the aforementioned embodiment, the present disclosure is not limited to this. In this disclosure, the relative moving amount of the working unit relative to the workpiece can be acquired based on the movement of any position of the multi-joint robot arm.

While the example in which the robot controller and the signal output are separately included in a common controller has been shown in the aforementioned embodiment, the present disclosure is not limited to this. In the present disclosure, alternatively, the robot controller and the signal output can be installed in separated controllers. Also, the signal output can be provided in a common controller together with the robot controller by adding hardware or can be provided in a common controller together with the robot controller by adding software.

While the example in which a signal is output based on a relative moving amount of the working unit by each relative moving amount of the working unit relative to the workpiece has been shown in the aforementioned embodiment, the present disclosure is not limited to this. Alternatively, in this disclosure, a relative position of the working unit relative to the workpiece can be output in real time based on the movement of the workpiece or the working unit arranged on the distal end part of the multi-joint robot arm. In this case, positional coordinates of a position of the distal end part of the multi-joint robot arm can be output. In this case, the multi-joint robot arm can be previously moved at a low speed to acquire positional coordinates of the position of the distal end part of the multi-joint robot arm, and signal based on the relative moving amount of the working unit can be output by linking the positional coordinates of the position of the distal end part of the multi-joint robot arm to relative moving amounts of the working unit relative to the workpiece in the movement of the multi-joint robot arm on the same path,.

Functions of elements disclosed in this specification can be realized by a circuit or processing circuit including a general purpose processor, a dedicated processor, an integrated circuit, ASIC (Application Specific Integrated Circuits), a conventional circuit and/or combination of them configured or programmed to realize the functions disclosed. Because processors include transistors and other circuits, they are considered as a processing circuit or a circuit. In the present disclosure, circuits, units or means are hardware for realizing the functions stated above, or hardware programmed to realize the functions stated above. The hardware can be hardware disclosed in this specification, or may be other known hardware programmed or configured to realize the functions stated above. In the case in which the hardware is a processor that can be considered as one type of circuits, the circuit, means or unit is a combination of hardware and software, and the software is used for configuration of the hardware and/or the processor.

### [Modes]

The aforementioned exemplary embodiment will be understood as concrete examples of the following modes by those skilled in the art.

### (Mode Item 1)

A robot system includes a multi-joint robot arm including a plurality of joints; a robot controller configured or programmed to control movement of the multi-joint robot arm; a working unit to work with a workpiece; a signal output to output a signal based on a relative moving amount of the working unit by each relative moving amount of the working unit relative to the workpiece in the movement of the workpiece or the working unit arranged on a distal end part of the multi-joint robot arm; and a work controller configured or programmed to control working of the working unit with the workpiece based on the signal output by the signal output.

### (Mode Item 2)

In the robot system according to mode item 1, the signal output outputs the signal, which is output based on the relative moving amount of the working unit, by using a variable frequency pulse signal by each relative moving amount of the working unit relative to the workpiece.

### (Mode Item 3)

In the robot system according to mode item 2, the signal output outputs a predetermined pulse signal by each relative moving amount of the working unit relative to the workpiece.

### (Mode Item 4)

In the robot system according to any of mode items 1 to 3, the work controller is configured or programmed to control the working of the working unit with the workpiece based on the signal output by the signal output as a trigger.

### (Mode Item 5)

In the robot system according to any of mode items 1 to 4, the work controller is configured to direct the working unit to work with the workpiece by each constant moving amount based on the signal output by the signal output.

### (Mode Item 6)

In the robot system according to any of mode items 1 to 5, the robot controller is configured to direct the multi-joint robot arm to move the working unit relative to the workpiece along a curve along a surface of the workpiece.

### (Mode Item 7)

In the robot system according to any of mode items 1 to 6, the signal output outputs, based on relative movements of a plurality of positions of the working unit, a plurality of signals each of which corresponds to one of the plurality of positions of the working unit.

### (Mode Item 8)

In the robot system according to any of mode items 1 to 7, the working unit includes at least one of a line camera, an area camera, a laser profile sensor, a ranging sensor, an applicator, an affixer, a sprayer, a welder, and an ultrasonic inspector.

### (Mode Item 9)

A robot includes a multi-joint robot arm including a plurality of joints; a robot controller configured or programmed to control movement of the multi-joint robot arm; and a signal output to output a signal based on a relative moving amount of a working unit by each relative moving amount of the working unit for working with the workpiece relative to the workpiece in the movement of the workpiece or the working unit arranged on a distal end part of the multi-joint robot arm.

### (Mode Item 10)

In the robot according to mode item 9, the signal output outputs the signal, which is output based on the relative moving amount of the working unit, by using a pulse signal by each relative moving amount of the working unit relative to the workpiece.

### (Mode Item 11)

In the robot according to any of mode items 1 to 10, the signal output outputs a relative position of the working unit relative to the workpiece based on the movement of the workpiece or the working unit arranged on the distal end part of the multi-joint robot arm.

### Description of the sign

10; multi-joint robot arm
21; robot controller
22; signal output
30; working unit
40; work controller
100; robot system
200; workpiece

## Claims

1. A robot system comprising:
a multi-joint robot arm including a plurality of joints;
a robot controller configured or programmed to control movement of the multi-joint robot arm;
a working unit to work with a workpiece;
a signal output to output a signal based on a relative moving amount of the working unit by each relative moving amount of the working unit relative to the workpiece in the movement of the workpiece or the working unit arranged on a distal end part of the multi-joint robot arm; and
a work controller configured or programmed to control working of the working unit with the workpiece based on the signal output by the signal output.

2. The robot system according to claim 1, wherein the signal output outputs the signal, which is output based on the relative moving amount of the working unit, by using a variable frequency pulse signal by each relative moving amount of the working unit relative to the workpiece.

3. The robot system according to claim 2, wherein the signal output outputs a predetermined pulse signal by each relative moving amount of the working unit relative to the workpiece.

4. The robot system according to claim 1, wherein the work controller is configured or programmed to control the working of the working unit with the workpiece based on the signal output by the signal output as a trigger.

5. The robot system according to claim 1, wherein the work controller is configured to direct the working unit to work with the workpiece by each constant moving amount based on the signal output by the signal output.

6. The robot system according to claim 1, wherein the robot controller is configured to direct the multi-joint robot arm to move the working unit relative to the workpiece along a curve along a surface of the workpiece.

7. The robot system according to claim 1, wherein the signal output outputs, based on relative movements of a plurality of positions of the working unit, a plurality of signals each of which corresponds to one of the plurality of positions of the working unit.

8. The robot system according to claim 1, wherein the working unit includes at least one of a line camera, an area camera, a laser profile sensor, a ranging sensor, an applicator, an affixer, a sprayer, a welder, and an ultrasonic inspector.

9. A robot comprising:
a multi-joint robot arm including a plurality of joints;
a robot controller configured or programmed to control movement of the multi-joint robot arm; and
a signal output to output a signal based on a relative moving amount of a working unit by each relative moving amount of the working unit for working with the workpiece relative to the workpiece in the movement of the workpiece or the working unit arranged on a distal end part of the multi-joint robot arm.

10. The robot according to claim 9, wherein the signal output outputs the signal, which is output based on the relative moving amount of the working unit, by using a pulse signal by each relative moving amount of the working unit relative to the workpiece.

11. The robot according to claim 1, wherein the signal output outputs a relative position of the working unit relative to the workpiece based on the movement of the workpiece or the working unit arranged on the distal end part of the multi-joint robot arm.
